# FASCICULE DE BREVET EUROPEEN

(11) **EP 3 008 021 B1**
(45) Date de publication et mention de la délivrance du brevet: **13.11.2019**
(21) Numéro de dépôt: 14734870.0
(22) Date de dépôt: 04.06.2014
(51) Int. Cl.: B29B 11/00, G02B 6/02, B29D 11/00

(54) **GUIDE D'ONDE A COEUR CREUX AVEC UN CONTOUR OPTIMISE**
HOHLKERNWELLENLEITER MIT OPTIMIERTER KONTUR
HOLLOW CORE WAVEGUIDE WITH OPTIMIZED CONTOUR

(30) Priorité: 10.06.2013 FR 1355314
(43) Date de publication de la demande: 20.04.2016
(73) Titulaire: Université de Limoges, 87032 Limoges Cedex (FR); CNRS, 75016 Paris (FR); GLOphotonics SAS, 87069 Limoges (FR)
(72) Inventeur: BENABID, Fetah, 87410 Le Palais Sur Vienne (FR); GERÔME, Frédéric, 87100 Limoges (FR); DEBORD, Benoit, 87000 Limoges (FR)
(74) Mandataire: Aquinov
(86) Numéro de dépôt international: PCT/FR2014/051326
(87) Numéro de publication internationale: WO 2014/199048

(56) Documents cités:
- WO-A1-2009/044100
- GB-A- 2 389 915
- US-A1- 2005 185 908
- US-A1- 2005 226 578
- US-A1- 2011 085 769
- US-B1- 6 539 155
- US-B1- 6 985 661
- WANG Y Y ET AL: "Low loss broadband transmission in hypocycloid-core Kagome hollow-core photonic crystal fiber", OPTICS LETTERS; THE OPTICAL SOCIETY, vol. 36, no. 5, 1 mars 2011 (2011-03-01), pages 669-671, XP001560624, ISSN: 0146-9592, DOI: 10.1364/OL.36.000669 [extrait le 2011-02-23]

## Description

La présente invention concerne un guide d'onde à cœur creux avec un contour optimisé permettant notamment de réduire les pertes de transmission. Elle concerne plus particulièrement une fibre à cristaux photoniques à cœur creux avec un contour optimisé pour une transmission avec de faibles pertes linéiques, un contenu modal s'approchant et égalant le régime monomodal et enfin un très faible recouvrement du champ du mode guidé avec le matériau constituant le contour du cœur creux.

Les fibres à cristaux photoniques (FCP ou PCF en anglais pour « photonic crystal fiber ») sont des guides d'onde formés d'un réseau périodique en deux dimensions d'inclusions qui s'étendent sur toute la longueur de la fibre. Grâce à leurs structures, ces fibres assurent le confinement des ondes électromagnétiques dans le cœur de la fibre.

Ces fibres à cristaux photoniques offrent une grande variété de possibilités pour le guidage en ajustant leurs paramètres opto-géométriques comme par exemple le diamètre des inclusions, la répartition des inclusions, la périodicité (pas entre deux inclusions), le nombre de couches, l'indice des matériaux utilisés. Plusieurs techniques peuvent être utilisées pour réaliser ces fibres à cristaux photoniques.

Selon un premier mode opératoire dit par empilage et étirage (en anglais « stack and draw »), on assemble en botte des capillaires sous forme de tubes creux de 1 à 2 mm de diamètre. Cette botte est ensuite insérée dans un tube pour assurer le maintien des capillaires. Le tube et la botte de capillaires sont ensuite étirés. Dans le cas d'une fibre à cristaux photoniques à cœur creux, le centre ne comprend pas de capillaires afin de former le cœur creux.

Selon un autre mode opératoire, un cylindre peut être usiné de manière à générer les inclusions puis étiré.

Les fibres à cristaux photoniques comprennent les fibres à cristaux photoniques à cœur plein et celles à cœur creux (HC-PCF fiber).

La présente invention se rapporte plus particulièrement aux fibres à cristaux photoniques à cœur creux.

A titre d'exemple, le document US-7.315.678 décrit un guide d'onde sous forme d'une fibre à cristaux photoniques à cœur creux comprenant une gaine avec une structure triangulaire, l'absence de capillaire en partie centrale formant le cœur creux. Avant la phase d'étirage, le cœur creux est délimité par une succession d'arcs de cercle qui correspondent aux parois des capillaires qui délimitent le cœur creux. Selon une particularité de cette invention, avant la phase d'étirage, le cœur creux a dans une section transversale une forme non circulaire avec une première dimension selon une première direction plus importante qu'une seconde dimension selon une seconde direction. Lors de la phase d'étirage, les arcs formant le contour du cœur creux ont tendance à s'aplatir, si bien que le cœur creux a une section approximativement circulaire après la phase d'étirage. Selon ce document, la fibre décrite permet d'obtenir de faibles pertes, de l'ordre de 1 dB/m pour une plage de longueurs d'onde allant de 1 mm à 1,5 *µ*m et dont le guidage est optimisé pour la plage spectrale des « Téra hertz ».

En fonction de la nature du guidage, les fibres à cristaux photoniques comprennent des fibres à guidage par Bande Interdite Photonique (fibre BIP ou PBG fiber en anglais pour « Photonic Band Gap fiber») comme par exemple la fibre du document US 6 539 155, ainsi que des fibres à guidage par couplage inhibé (en anglais Inhibited coupling guiding HC-PCF) également appelées fibres à large pas (en anglais large-pitch HC-PCF) ou de type kagome.

Les fibres à guidage par Bande Interdite Photonique à cœur creux selon l'art antérieur présentent les inconvénients suivants :
Même si pour certaines longueurs d'onde de l'ordre de 1,5 *µ*m, il est possible d'obtenir des pertes de transmission de l'ordre de 1 dB/km, cette valeur augmente très vite pour des longueurs d'onde plus courtes. Ainsi, pour les longueurs d'onde du visible, les pertes de transmission peuvent atteindre 1000 dB/km.

Selon une autre problématique, ces fibres à guidage par Bande Interdite Photonique ont une bande passante de l'ordre de 70 THz qui peut s'avérer trop étroite pour certaines applications comme l'optique non-linéaire, le guidage d'impulsions laser très brèves.

Selon une autre problématique, les fibres à guidage par Bande Interdite Photonique à cœur creux de l'art antérieur présentent une dispersion trop élevée et structurée pour certaines applications comme la spectroscopie à haute résolution ou le guidage d'impulsions laser très brèves.

Enfin, selon une autre problématique, les fibres à guidage par Bande Interdite Photonique à cœur creux de l'art antérieur présentent un fort recouvrement de puissance entre le mode guidé dans le cœur et le contour qui engendre un seuil de dommage laser faible.

Les fibres à guidage par couplage inhibé ont pour avantage de procurer une bande passante ultra large contrairement aux fibres à guidage par Bande Interdite Photonique à cœur creux. En contrepartie, ces fibres ont des pertes de transmission supérieures à celles des fibres à guidage par Bande Interdite Photonique à cœur creux, supérieures à 0,5 dB/m.

Les fibres à guidage par couplage inhibé peuvent avoir différentes structures concernant la gaine.

Selon une première structure dite triangulaire, le réseau des inclusions se présente sous la forme de capillaires avec des sections circulaires, répartis sur une surface hexagonale, les centres des capillaires étant disposés de manière à former des triangles équilatéraux.

Selon une seconde structure dite structure de type kagome, le réseau des inclusions est délimité par des parois qui sont parallèles à la direction de propagation de la fibre et orientées selon trois directions à 60° de manière à isoler des canaux avec des sections hexagonales et d'autres avec des sections triangulaires. Selon cet agencement, les trois parois ne sont pas concourantes en un même point.

A titre d'exemple, le document WO2009/044100 décrit une fibre à cristaux à guidage par couplage inhibé avec une structure de type Kagome.

Pour obtenir ce type de guidage, après la phase d'étirage, les parois des inclusions doivent être les plus fines possibles et les plus longues possibles entre deux nœuds consécutifs, ce qui correspond à des structures à pas large.

La publication « Low loss broadband transmission in hypocycloid-core Kagome hollow-core photonic crystal fiber" March 1, 2011/ Vol.36, No.5/ OPTICS LETTERS » propose une fibre à guidage par couplage inhibé avec une structure de type Kagome et un cœur creux. Plus particulièrement, ce document décrit deux fibres, une première fibre avec un cœur approximativement circulaire et une seconde fibre avec un cœur délimité par un contour qui comprend une suite d'arcs. Selon ce document, ces arcs forment un contour hypocycloïdal. Contrairement à la première fibre qui génère une perte de transmission de l'ordre de 1,4 dB/m, la seconde fibre génère une perte de transmission de l'ordre de 0,4 dB/m.

Selon ce document, il est possible d'obtenir une fibre qui génère une perte de transmission de l'ordre de 180 dB/Km avec une bande passante de l'ordre de 200 THz.

La présente invention vise à remédier aux inconvénients de l'art antérieur en proposant un guide d'onde à cœur creux possédant un contour optimisé permettant d'améliorer les performances de ladite fibre, notamment en matière de pertes de transmission notamment pour des longueurs d'onde courtes allant des plus courtes dans le domaine des UV ou EUV, au plus longues dans l'IR.

A cet effet, l'invention a pour objet un guide d'onde à cœur creux selon la revendication 1.

De préférence, l'épaisseur des arcs est égale ou inférieure à la moitié de la longueur d'onde maximale guidée.

L'invention propose également une fibre à cristaux photoniques à cœur creux selon la revendication 8.

De préférence, la fibre à cristaux photoniques à cœur creux selon l'invention comprend une gaine dont la structure permet d'obtenir un guidage par couplage inhibé. Selon un mode de réalisation privilégié, la structure de la gaine est de type Kagome.

L'invention concerne également des dispositifs comprenant un guide d'onde ou une fibre à cristaux photoniques conforme à l'invention, comme un dispositif permettant le déport d'une puissance laser, un dispositif de compression d'impulsions laser, un laser à gaz dont le cœur creux est rempli d'un gaz, un dispositif d'imagerie, un dispositif d'étalonnage de fréquence, un dispositif de guidage, cette liste n'étant pas exhaustive.

D'autres caractéristiques et avantages ressortiront de la description qui va suivre de l'invention, description donnée à titre d'exemple uniquement, en regard des dessins annexés sur lesquels :
- la figure 1 est une coupe d'une première variante d'une fibre à cristaux photoniques à cœur creux qui illustre l'invention avec une première structure de gaine,
- la figure 2 est une coupe d'une autre variante d'une fibre à cristaux photoniques à cœur creux qui illustre l'invention avec une autre structure de gaine,
- la figure 3 est une coupe illustrant en détails le contour du cœur creux de la fibre illustrée sur la figure 2,
- la figure 4 est une coupe illustrant en détails le contour du cœur creux d'une fibre selon une autre variante de l'invention,
- la figure 5A est une coupe d'une fibre selon un premier mode de réalisation de l'invention associée à un diagramme illustrant la courbe des pertes de transmission en fonction des longueurs d'onde de ladite fibre, et
- la figure 5B est une coupe d'une fibre selon un autre mode de réalisation de l'invention associée à un diagramme illustrant la courbe des pertes de transmission en fonction des longueurs d'onde de ladite fibre.

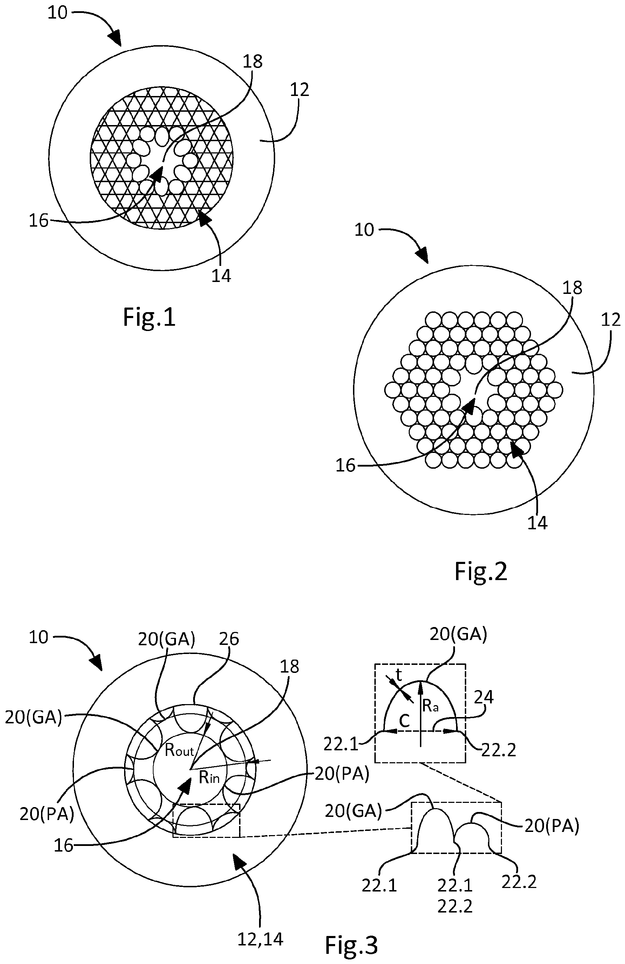

Sur les figures 1 à 4, on a représenté en 10 un guide d'onde sous forme d'une fibre à cristaux photoniques.

La fibre à cristaux photoniques 10 comprend de l'extérieur vers l'intérieur une enveloppe protectrice 12, une gaine 14 et un cœur creux 16 délimité par un contour. Le cœur creux peut comprendre de l'air ou un gaz adapté à la fonction de la fibre.

La gaine 14 comprend une pluralité d'inclusions qui s'étendent sur toute la longueur de la fibre à cristaux photoniques 10.

Le centre du cœur de la fibre est référencé 18.

La structure de la gaine 14 (à savoir la répartition, les formes des inclusions et les matériaux utilisés) permet de confiner les ondes électromagnétiques dans le cœur creux 16.

Selon une première variante illustrée sur la figure 1, la gaine 14 a une structure de type Kagome. Selon une autre variante illustrée sur la figure 2, la gaine 14 a une structure triangulaire. Bien entendu, l'invention n'est pas limitée à ces variantes.

Ainsi, le motif de la structure peut ne pas être uni sur toute la section de la gaine. Ainsi, la gaine peut avoir plusieurs motifs concentriques par rapport au centre 18 de la fibre.

Selon un mode de réalisation privilégié, la gaine a une structure permettant d'obtenir un guidage par couplage inhibé. A cet effet, la structure de la gaine est dite à pas large (en anglais « large pitch »). De préférence, la gaine a une structure à large pas de type Kagome.

Ainsi, la structure de la gaine est choisie de manière à accorder l'indice de la gaine aux indices effectifs des modes guidés.

Par large pas, on entend que la structure a un pas supérieur ou égal à cinq fois la longueur d'onde de l'onde guidée.

La gaine n'est pas plus décrite car elle peut avoir différentes configurations. Selon les variantes, la gaine peut être uniforme, comprendre une structure périodique, quasi-périodique ou non périodique.

Le cœur creux 16 est délimité par un contour fermé comprenant une succession d'arcs 20 avec une courbure négative (partie bombée orientée vers le centre 18). Chaque arc 20 comprend deux extrémités 22.1 et 22.2, deux arcs adjacents ayant une extrémité commune. La gaine 14 assure le rôle de protection et de maintien des arcs 20.

Selon un point important, pour la suite de la description, la géométrie du cœur creux est décrite la fibre finie, soit après la phase d'étirage dans le cas d'un procédé de réalisation intégrant une phase d'étirage et non avant la phase d'étirage.

Chaque arc 20 comprend une corde 24 qui correspond à la droite passant par les extrémités 22.1 et 22.2 de l'arc.

De préférence, chaque arc 20 est symétrique par rapport à une droite passant par le centre 18 et le milieu de la corde 24. Ainsi, les extrémités 22.1 et 22.2 de tous les arcs 20 sont disposées sur un cercle référencé 26 ayant pour centre le centre 18 du cœur creux de la fibre. Chaque arc est une quasi-hypocycloïde dont le cercle directeur est le cercle 26 des extrémités des arcs.

Pour chaque arc 20, la corde a une longueur C et Ra correspond à la distance maximale entre la corde 24 et l'arc 20.

Selon une caractéristique importante de l'invention, le contour du cœur creux comprend des petits arcs PA et des grands arcs GA disposés de manière alternée. Ainsi, chaque petit arc PA est disposé entre deux grands arcs GA et chaque grand arc GA est disposé entre deux petits arcs PA. Le contour comprend autant de petits arcs PA que de grands arcs GA.

Selon l'invention, les grands arcs GA ont un rapport b=2Ra/C supérieur ou égal à 0,9.

De préférence, tous les grands arcs GA ont le même rapport b.

De préférence, tous les petits arcs PA ont le même rapport b'=2Ra/C. Avantageusement, le rapport b' des petits arcs PA est inférieur ou égal à 0,8. Selon un mode de réalisation privilégié illustré sur la figure 3, le contour du cœur creux comprend six grands arcs GA et six petits arcs PA.

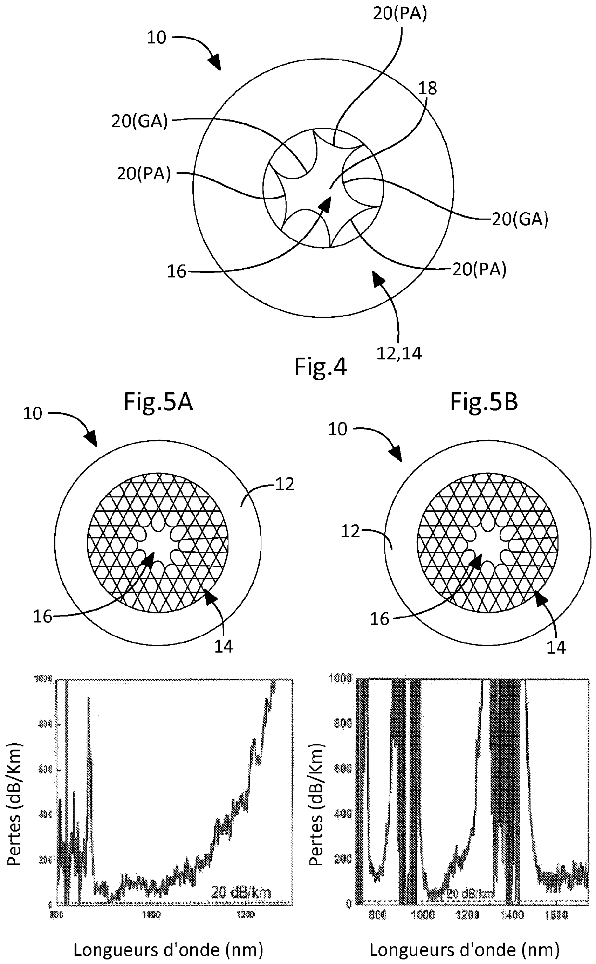

Selon un autre mode de réalisation illustré sur la figure 4, le contour du cœur creux comprend trois grands arcs GA et trois petits arcs PA.

L'invention n'est pas limitée à ces modes de réalisation. Quel que soit le mode de réalisation, le contour creux comprend au moins trois grands arcs GA et au moins trois petits arcs PA.

Comme illustré sur les figures, les petits arcs PA définissent un cercle sous-jacent Rout et les grands arcs un cercle sous-jacent Rint qui a un diamètre inférieur au cercle sous-jacent Rint, les deux cercles sous-jacent Rint et Rout ayant le même centre 18 celui du cœur creux de la fibre.

Selon un mode de réalisation illustré sur les figures 1 et 2, le cœur creux 16 est délimité par des capillaires dont les centres sont disposés sur le cercle 26, les capillaires étant de manière alternée en forme de cercle et d'ellipse et juxtaposés.

La géométrie du contour du cœur creux précédemment définie permet d'éviter le recouvrement spatial entre les champs du mode guidé dans le cœur creux et le contour, d'augmenter la longueur du contour et par conséquent exacerber l'inhibition du couplage entre le mode fondamental du cœur avec ceux portés par le contour. La géométrie permet également d'écarter le plus possible les extrémités 22.1, 22.2 du centre 18 du cœur.

Selon une autre caractéristique de l'invention, l'épaisseur des arcs 20 notée t est égale ou inférieure à la moitié de la longueur d'onde maximale guidée. A titre d'exemple, si la longueur d'onde maximale guidée est égale à 2 *µ*m*,* l'épaisseur des arcs doit être inférieure à 1 *µ*m*.*

Concernant les matériaux utilisés, le matériau des arcs 20 est choisi de manière à obtenir un indice de réfraction supérieur à 1,2 dans la gamme des longueurs d'onde ciblée.

Selon un mode de réalisation adapté pour guider des ondes dans la gamme de longueurs d'onde de type microonde allant de l'ordre de 1m à 1mm, l'épaisseur t des arcs est de l'ordre de 0,5 mm. Le matériau choisi est hautement réflectif, comme par exemple un métal réflectif tel que le cuivre, ou présente un faible coefficient d'absorption comme le quartz. Dans cette gamme de longueurs d'onde, les arcs 20 peuvent être en métal, en verre, en verre borosilicate, en quartz, en un matériau céramique, en polytétrafluoroéthylène,...

Selon un mode de réalisation adapté pour guider des ondes dans la gamme de longueurs d'onde de type THz allant de l'ordre de 100 *µ*m à 1 mm, l'épaisseur t des arcs est de l'ordre de 50 *µ*m*.* Le matériau choisi est en téflon ou en un matériau exhibant un faible coefficient d'absorption et un indice de réfraction supérieur à 1,2, comme par exemple en polytétrafluoroéthylène.

Selon un mode de réalisation adapté pour guider des ondes dans la gamme de longueurs d'onde allant de l'ordre de 2 *µ*m à 10 nm, l'épaisseur t des arcs est de l'ordre de 1 *µ*m*.* Le matériau choisi sera le plus transparent possible comme par exemple de la silice pure ou du verre mou.

Pour toutes ces gammes de longueurs d'onde, la fibre peut être obtenue par empilage et étirage ou par usinage et étirage.

Sur les figures 5A et 5B, on a représenté des fibres à cristaux photoniques à cœur creux avec un contour comprenant six petits arcs PA et six grands arcs GA*.* Ces fibres comprennent une structure de type Kagome. La structure peut être réalisée en utilisant les enseignements des documents WO2006077437 et WO2009/044100.

Ces fibres sont réalisées par empilage et étirage de capillaires avec des sections circulaires. Le profil du contour du cœur sera obtenu en optimisant les paramètres rhéologiques du matériau, les températures et les différentiels de pression entre les capillaires lors de la mise en œuvre de la phase d'étirage.

Sur la figure 5A, la fibre a un contour avec b=0,9 et t=800 nm.

Sur la figure 5B, la fibre a un contour avec b=1 et t=1400 nm.

Les mesures réalisées dans la gamme spectrale allant de 800 nm et 1200 nm montrent que les fibres guident en exhibant des bandes de faible guidage qui sont dues à une interaction résonante entre les modes guidés dans le cœur et ceux dans les arcs. Comme visible sur les diagrammes, les pertes de transmission descendent à un niveau de 20 dB/km pour les longueurs d'onde comprises entre 800 nm et 1200 nm. A titre comparatif, la fibre illustrée dans la publication « Low loss broadband transmission in hypocycloid-core Kagome hollow-core photonic crystal fiber" March 1, 2011/ Vol.36, No.5/ OPTICS LETTERS » a pour les plus grands arcs une courbure b inférieure ou égale à 0,75 et génère une perte de transmission au mieux égale à approximativement 180 dB/km.

Par conséquent, l'optimisation du contour du cœur et plus particulièrement de la valeur b des grands arcs procure une nette réduction des pertes de transmission.

L'optimisation du paramètre de courbure b du contour du cœur creux 18 permet d'augmenter l'inhibition du couplage et par conséquent de réduire les pertes de transmission du guide d'onde. L'optimisation du paramètre de courbure b permet d'obtenir une réduction drastique du recouvrement de la puissance optique dans la gaine permettant notamment le déport de puissance laser.

La fibre à cristaux photoniques selon l'invention permet d'obtenir un guide qui combine une faible perte de transmission, un guidage monomode et un seuil de dommage par laser très élevé.

Bien que décrite de manière préférentielle appliquée à une fibre à cristaux photoniques, l'invention peut s'appliquer de manière générale à un guide d'onde. Cependant, elle est plus particulièrement adaptée aux fibres à guidage par couplage inhibé qui optimise à la fois la structure de la gaine et le contour du cœur creux.

Le guide d'onde ou la fibre à guidage par couplage inhibé à cœur creux avec un contour optimisé selon l'invention peut être utilisé(e) dans les applications suivantes (non exhaustives) :
- le déport d'une puissance laser dans le domaine du micro-usinage par laser, de la chirurgie, du traitement de cellules (cellules cancéreuses),
- la compression par des effets non linéaires d'impulsions laser, en particulier d'impulsions à fort flux,
- l'imagerie Térahertz,
- les lasers à gaz, le cœur rempli d'un gaz actif étant utilisé comme un milieu d'amplification,
- le guidage monomodal et à faibles pertes de transmission d'ondes dans la gamme des microondes ou des THz,
- l'étalonnage de fréquence, le cœur étant rempli d'un gaz.

## Revendications

1. Guide d'onde à cœur creux (16) pour guidage par couplage inhibé, le cœur creux (16) étant délimité par un contour fermé comprenant une succession d'arcs (20) avec une courbure négative, la partie bombée étant orientée vers le centre (18) du cœur creux (16), chaque arc comprenant une corde (24) **correspondant** au segment reliant **les extrémités (22.1, 22.2) dudit l'arc,** les arcs ayant une épaisseur donnée t, le contour du cœur creux (16) comprenant des petits arcs (PA) et des grands arcs (GA), disposés de manière alternée, chaque arc (20) étant symétrique par rapport à une droite passant par le centre (18) du cœur creux (16) et le milieu de sa corde (24), le rapport b=2Ra/C des grands arcs étant supérieur à 0,9 pour les grands arcs (GA), Ra correspondant à la distance maximale entre la corde (24) et l'arc (20), C correspondant à la longueur de la corde (24).

2. Guide d'onde selon la revendication 1, **caractérisé en ce que** le contour du cœur creux (16) comprend au moins trois petits arcs (PA) et au moins trois grands arcs (GA).

3. Guide d'onde selon la revendication 1 ou 2, **caractérisé en ce que** tous les grands arcs (GA) ont tous le même rapport b.

4. Guide d'onde selon l'une des revendications précédentes, **caractérisé en ce que** le rapport b' des petits arcs (PA) est inférieur ou égal à 0,8.

5. Guide d'onde selon l'une des revendications précédentes, **caractérisé en ce que** l'épaisseur t des arcs (20) est égale ou inférieure à la moitié de la longueur d'onde maximale guidée.

6. Guide d'onde selon l'une des revendications précédentes, **caractérisé en ce que** le matériau des arcs (20) a un indice de réfraction supérieur à 1,2 dans la gamme des longueurs d'onde ciblée.

7. Guide d'onde selon l'une des revendications précédentes, **caractérisé en ce que** le cœur creux (16) est rempli d'un gaz adapté à la fonction du guide d'onde.

8. Fibre à cristaux photoniques à cœur creux (16) pour guidage par couplage inhibé, le cœur creux (16) étant délimité par un contour fermé comprenant une succession d'arcs (20) avec une courbure négative, la partie bombée étant orientée vers le centre (18) du cœur creux (16), chaque arc comprenant une corde (24) correspondant au segment reliant les extrémités (22.1, 22.2) dudit l'arc, les arcs ayant une épaisseur donnée t, le contour du coeur creux (16) comprenant des petits arcs (PA) et des grands arcs (GA) disposés de manière alternée, chaque arc (20) étant symétrique par rapport à une droite passant par le centre (18) du coeur creux (16) et le milieu de sa corde (24), le rapport b=2Ra/ C des grands arcs étant supérieur à 0,9 pour les grands arcs (GA), Ra correspondant à la distance maximale entre la corde (24) et l'arc (20), C correspondant à la longueur de la corde (24).

9. Fibre selon la revendication 8, **caractérisée en ce qu'**elle comprend une gaine (14) avec une structure permettant d'obtenir un guidage par couplage inhibé.

10. Fibre selon la revendication 9, **caractérisée en ce que** la structure de la gaine (14) est de type Kagome à pas large, **supérieur ou égal à cinq fois la longueur d'onde de l'onde guidée.**

11. Dispositif permettant le déport d'une puissance laser comprenant un guide d'onde selon l'une des revendications 1 à 7 ou une fibre selon l'une des revendications 8 à 10.

12. Dispositif de compression d'impulsions laser comprenant un guide d'onde selon l'une des revendications 1 à 7 ou une fibre selon l'une des revendications 8 à 10.

13. Laser à gaz comprenant un guide d'onde selon l'une des revendications 1 à 7 ou une fibre selon l'une des revendications 8 à 10 dont le cœur creux est rempli d'un gaz.

14. Dispositif d'imagerie comprenant un guide d'onde selon l'une des revendications 1 à 7 ou une fibre selon l'une des revendications 8 à 10.

15. Dispositif d'étalonnage de fréquence comprenant un guide d'onde selon l'une des revendications 1 à 7 ou une fibre selon l'une des revendications 8 à 10.

16. Dispositif de guidage comprenant un guide d'onde selon l'une des revendications 1 à 7 ou une fibre selon l'une des revendications 8 à 10.

## Patentansprüche

1. Hohlkernwellenleiter (16) zum Leiten durch unterdrückte Kopplung, wobei der Hohlkern (16) durch eine geschlossene Kontur, die eine Folge von Bögen (20) mit einer negativen Wölbung umfasst, abgegrenzt ist, wobei der gewölbte Bereich zur Mitte (18) des Hohlkerns (16) gerichtet ist und jeder Bogen einen dem Segment, das die Enden (22.1, 22.2) des Bogens miteinander verbindet, entsprechenden Strang (24) umfasst, wobei die Bögen eine gegebene Stärke t aufweisen und die Kontur des Hohlkerns (16) abwechselnd angeordnete kleine (PA) und große (GA) Bögen umfasst und jeder Bogen (20) in Bezug zu einer durch die Mitte (18) des Hohlkerns (16) und die Mitte seines Strangs (24) führenden Geraden symmetrisch ist, wobei der Quotient b = 2Ra/C der großen Bögen bei den großen Bögen (GA) größer als 0,9 ist, wobei Ra dem maximalen Abstand zwischen dem Strang (24) und dem Bogen (20) und C der Stranglänge (24) entspricht.

2. Wellenleiter nach Anspruch 1, **dadurch gekennzeichnet, dass** die Kontur des Hohlkerns (16) mindestens drei kleine Bögen (PA) und mindestens drei große Bögen (GA) umfasst.

3. Wellenleiter nach Anspruch 1 oder 2, **dadurch gekennzeichnet, dass** alle großen Bögen (GA) denselben Quotienten b haben.

4. Wellenleiter nach einem der vorausgehenden Ansprüche, **dadurch gekennzeichnet, dass** der Quotient b' der kleinen Bögen (PA) kleiner gleich 0,8 ist.

5. Wellenleiter nach einem der vorausgehenden Ansprüche, **dadurch gekennzeichnet, dass** die Stärke t der Bögen (20) kleiner gleich der Hälfte der maximal geleiteten Wellenlänge ist.

6. Wellenleiter nach einem der vorausgehenden Ansprüche, **dadurch gekennzeichnet, dass** das Material der Bögen (20) für den anvisierten Wellenlängenbereich einen Brechungsindex von über 1,2 hat.

7. Wellenleiter nach einem der vorausgehenden Ansprüche, **dadurch gekennzeichnet, dass** der Hohlkern (16) mit einem für die Funktion des Wellenleiters geeigneten Gas gefüllt ist.

8. Hohlkern-Photonenkristallfaser (16) zum Leiten durch unterdrückte Kopplung, wobei der Hohlkern (16) durch eine geschlossene Kontur, die eine Folge von Bögen (20) mit einer negativen Wölbung umfasst, abgegrenzt ist, wobei der gewölbte Bereich zur Mitte (18) des Hohlkerns (16) gerichtet ist und jeder Bogen einen dem Segment, das die Enden (22.1, 22.2) des Bogens miteinander verbindet, entsprechenden Strang (24) umfasst, wobei die Bögen eine gegebene Stärke t aufweisen und die Kontur des Hohlkerns (16) abwechselnd angeordnete kleine (PA) und große (GA) Bögen umfasst und jeder Bogen (20) in Bezug zu einer durch die Mitte (18) des Hohlkerns (16) und die Mitte seines Strangs (24) führenden Geraden symmetrisch ist, wobei der Quotient b = 2Ra/C der großen Bögen bei den großen Bögen (GA) größer als 0,9 ist, wobei Ra dem maximalen Abstand zwischen dem Strang (24) und dem Bogen (20) und C der Stranglänge (24) entspricht.

9. Faser nach Anspruch 8, **dadurch gekennzeichnet, dass** sie einen Mantel (14) mit einer Beschaffenheit umfasst, die ein Leiten durch unterdrückte Kopplung ermöglicht.

10. Faser nach Anspruch 9, **dadurch gekennzeichnet, dass** der Mantel (14) eine kagoméartige Struktur mit breiter Steigung aufweist, die größer gleich der fünffachen Wellenlänge der geleiteten Welle ist.

11. Vorrichtung zum Verschieben einer Laserleistung, einen Wellenleiter nach einem der Ansprüche 1 bis 7 oder eine Faser nach einem der Ansprüche 8 bis 10 umfassend.

12. Verdichtungsvorrichtung von Laserimpulsen, einen Wellenleiter nach einem der Ansprüche 1 bis 7 oder eine Faser nach einem der Ansprüche 8 bis 10 umfassend.

13. Gaslaser, einen Wellenleiter nach einem der Ansprüche 1 bis 7 oder eine Faser nach einem der Ansprüche 8 bis 10 umfassend, dessen Hohlkern mit einem Gas gefüllt ist.

14. Bildgebungsvorrichtung mit einem Wellenleiter nach einem der Ansprüche 1 bis 7 oder einer Faser nach einem der Ansprüche 8 bis 10.

15. Frequenz-Kalibriervorrichtung mit einem Wellenleiter nach einem der Ansprüche 1 bis 7 oder einer Faser nach einem der Ansprüche 8 bis 10.

16. Leiter-Vorrichtung mit einem Wellenleiter nach einem der Ansprüche 1 bis 7 oder einer Faser nach einem der Ansprüche 8 bis 10.

## Claims

1. A waveguide with a hollow core (16) for guidance by inhibited coupling, the hollow core (16) being delimited by a closed contour comprising a succession of arcs (20) with a negative curvature, the convex part being oriented towards the centre (18) of the hollow core (16), each arc comprising a chord (24) corresponding to the segment connecting the ends (22.1, 22.2) of said arc, the arcs having a given thickness t, the contour of the hollow core (16) comprising small arcs (PA) and large arcs (GA) disposed in alternation, each arc (20) being symmetrical with respect to a straight line passing through the centre (18) of the hollow core (16) and the middle of its chord (24), the ratio b = 2Ra/C of the large arcs being greater than 0.9 for the large arcs (GA), Ra corresponding to the maximum distance between the chord (24) and the arc (20), C corresponding to the length of the chord (24).

2. A waveguide according to claim 1, **characterised in that** the contour of the hollow core (16) comprises at least three small arcs (PA) and at least three large arcs (GA).

3. A waveguide according to claim 1 or 2, **characterised in that** all the large arcs (GA) all have the same ratio b.

4. A waveguide according to any of the preceding claims, **characterised in that** the ratio b' of the small arcs (PA) is less than or equal to 0.8.

5. A waveguide according to any of the preceding claims, **characterised in that** the thickness t of the arcs (20) is equal to or less than half the maximum guided wavelength.

6. A waveguide according to any of the preceding claims, **characterised in that** the material of the arcs (20) has a refractive index greater than 1.2 in the targeted wavelength range.

7. A waveguide according to any of the preceding claims, **characterised in that** the hollow core (16) is filled with a gas suited to the function of the waveguide.

8. A photonic crystal fibre with a hollow core (16) for guidance by inhibited coupling, the hollow core (16) being delimited by a closed contour comprising a succession of arcs (20) with a negative curvature, the convex part being oriented towards the centre (18) of the hollow core (16), each arc comprising a chord (24) corresponding to the segment connecting the ends (22.1, 22.2) of said arc, the arcs having a given thickness t, the contour of the hollow core (16) comprising small arcs (PA) and large arcs (GA) disposed in alternation, each arc (20) being symmetrical with respect to a straight line passing through the centre (18) of the hollow core (16) and the middle of its chord (24), the ratio b = 2Ra/C of the large arcs being greater than 0.9 for the large arcs (GA), Ra corresponding to the maximum distance between the chord (24) and the arc (20), C corresponding to the length of the chord (24).

9. A fibre according to claim 8, **characterised in that** it comprises a sheath (14) with a structure making it possible to obtain guidance by inhibited coupling.

10. A fibre according to claim 9, **characterised in that** the structure of the sheath (14) is of the large-pitch kagome type, greater than or equal to five times the wavelength of the guided wave.

11. A device allowing the offsetting of a laser power, comprising a waveguide according to any of claims 1 to 7 or a fibre according to any of claims 8 to 10.

12. A device for compressing laser pulses, comprising a waveguide according to any of claims 1 to 7 or a fibre according to any of claims 8 to 10.

13. A gas laser comprising a waveguide according to any of claims 1 to 7 or a fibre according to any of claims 8 to 10, the hollow core of which is filled with a gas.

14. An imaging device comprising a waveguide according to any of claims 1 to 7 or a fibre according to any of claims 8 to 10.

15. A frequency-calibration device comprising a waveguide according to any of claims 1 to 7 or a fibre according to any of claims 8 to 10.

16. A guidance device comprising a waveguide according to any of claims 1 to 7 or a fibre according to any of claims 8 to 10.
